# EUROPEAN PATENT APPLICATION

(11) **EP 2 317 416 A1**
(43) Date of publication of application: **04.05.2011**
(21) Application number: 09806663.2
(22) Date of filing: 05.08.2009
(51) Int. Cl.: G06F 3/01, G06F 3/041, G06F 3/048, G06F 3/14, G09G 5/00

(54) **IMAGE DISPLAY DEVICE**

(30) Priority: 11.08.2008 JP 2008206807
(71) Applicant: Konica Minolta Holdings, Inc., Tokyo 100-0005 (JP)
(72) Inventor: TAKIMURA Ryo, Hino-shi Tokyo 191-8511 (JP); NAGANO Masakazu, Hino-shi Tokyo 191-8511 (JP); IKEDA Yusuke, Hino-shi Tokyo 191-8511 (JP); IRITANI Yu, Hino-shi Tokyo 191-8511 (JP)
(74) Representative: Gille Hrabal Struck Neidlein Prop Roos
(86) International application number: PCT/JP2009/063849
(87) International publication number: WO 2010/018770

(57) **Abstract**

On a table type image display device A, a display (105) displays objects D1, D2 as materials of business discussion. For example, when participants P1 and P2 of the discussion speak according to the common object D2, i.e., when a conflict between a plurality of participants occurs for an object, the conflict is automatically detected and the object is separated for display so that the participants can easily view the object.

## Description

### FIELD OF THE INVENTION

The present invention relates to an image display device (an electronic board or the like) used, for example, for discussion among a plurality of participants.

### BACKGROUND OF THE INVENTION

One of the proposals made so far in the conventional art includes an image display device (an electronic board or the like) used for discussion among a plurality of participants wherein photos and discussion materials are displayed. This image display device includes a table type image display device, wherein discussion is held among a plurality of participants surrounding a table type image display device, observing discussion materials displayed on the image display device.

The art disclosed in the Patent Literature 1 or 2 has been available for an image display device. In the art disclosed in the Patent Literature 1 or 2, discussion is held among a plurality of participants sitting around a table type image display device and observing the materials displayed on the common area of the image display device. If discussion can be held by observing the materials displayed on the image display device, there will be no need of preparing discussion materials in the form of paper for participants by printing out. This will enhance user convenience.

### EARLIER TECHNOGICAL LITERATURE

### PATENT LITERATURE

Patent Literature 1: Japanese Unexamined Patent Application Publication No. 2000-47786
Patent Literature 2: Japanese Unexamined Patent Application Publication No. 2000-47788

### SUMMARY OF THE INVENTION

### OBJECT OF THE INVENTION

Incidentally, when discussion is held among the participants sitting around the image display device using a material (object) appearing on the table type image display device, the material is easy for a participant to observe or difficult to observe, depending on the place occupied by the participant. For example, the displayed material is clearly visible to the participant sitting closer to the material, and is less clearly visible to the participant sitting farther away from the material. In this case, if the displayed position of the material has been moved closer to the person sitting farther away, the material will be difficult to see for the participant who has been sitting closer so far.

The material is easy to see for the participant viewing the material in the same direction as it is displayed. Conversely, the material is difficult to see for the participant viewing the material in the opposite direction, because the material appears upside down. If the material is rotated for the participant viewing the material in the opposite direction, the material will be difficult to view for the person having been watching comfortably.

In view of the problems described above, it is an object of the present invention to provide an image display device that ensures easy viewing by a plurality of participants when discussion is held among a plurality of participants sitting around the image display device using a material (object) appearing on a display.

### MEANS FOR SOLVING THE PROBLEMS

To achieve the aforementioned object, the image display device of the present invention includes:
a display section for displaying an object;
a detecting section for automatically detecting a conflict among a plurality of users regarding the object displayed on the display section; and
a separating section for separating a conflicting object into at least two objects when a conflict has been detected by the aforementioned detecting section.

### EFFECTS OF THE INVENTION

The image display device of the present invention ensures easy viewing for a plurality of participants when discussion is held among a plurality of participants surrounding a table type image display device, using one material (object) displayed on the image display device.

### BRIEF DESCRIPTION OF THE DRAWINGS

Fig. 1 is a schematic diagram representing an image display device of the present invention;
Fig. 2 is a block diagram representing an image display device of the present invention;
Fig. 3 is a flow chart representing separation of an object;
Figs. 4a and 4b are explanatory diagrams representing an overview of the separation of a conflicting object; and
Figs. 5a and 5b are another explanatory diagrams representing an overview of the separation of a conflicting object.

### DESCRIPTION OF THE PREFERRED EMBODIMENT

### [Overview of image display device]

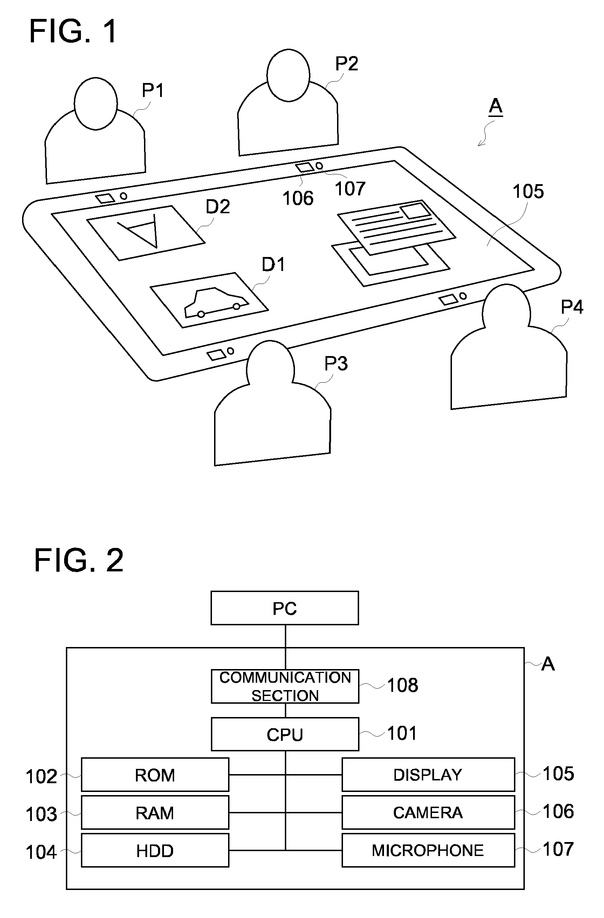

Fig. 1 is a schematic diagram representing an image display device of the present invention.

The image display device A of Fig. 1 is a table type device, wherein a display 105 extends in the horizontal direction. A plurality of participants P1 through P4 sit around the image display device A and have a discussion by watching objects D1 and D2 as materials appearing on the display 105.

The object D1 appearing on the display 105 is a photographic image, and the object D2 is a document image. Various forms of other objects can be shown on the display 105. The information of the object is stored in the HDD (Hard Disc Drive) 104 of the image display device A to be described later. The storage medium storing the object information is connected to the image display device A and can be shown on the display 105.

The display 105 is designed in a touch panel configuration. The objects D1 and D2 appearing on the display 105 can be touched by the participants P1 through P4 to change the display position of the objects D1 and D2. If the participants P1 through P4 touch the display 105 to describe a letter, the letter can be shown on the display 105.

A camera 106 and microphone 107 are separately installed where participants P1 through P4 are sitting. The participants P1 through P4 are photographed by the camera 106, and the voices of the participants P1 through P4 are picked up by the microphone 107.

The image display device A of Fig. 1 is used independently when four participants P1 through P4 have a discussion. The image display device A can be linked with another image display device located at a remote place via the network. In this case, one and the same object is shown on the respective displays, and the image captured by the camera 106 and the voice picked up by the microphone 107 in one of these image display devices are transmitted to the other image display device, so that participants located at different places can have a discussion.

Fig. 2 is a block diagram representing an image display device of the present invention. It shows a typical structure.

As shown in Fig. 2, the image display device A is linked to a personal computer via a communication section 108. The data sent from the personal computer can be stored in the HDD 104, and can be displayed as an object on the display 105.

The image display device A includes a CPU (Central Processing Unit) 101, ROM (Read Only Memory) 102, RAM (Random Access Memory) 103, and others. The CPU 101 controls the operation of the entire image display device, and is connected with the ROM 102 and RAM 103. The CPU 101 reads out various forms of program stored in the ROM 102, expands them on the RAM 103, and controls operations of various sections. Further, the CPU 101 implements various forms of processing according to the program expanded on the RAM 103. The result of processing is stored in the RAM 103. The result of processing stored in the RAM 103 is stored in a prescribed storage site. In this embodiment, the CPU 101 constitutes a detecting section, separating section and adjusting section through collaboration with the ROM 102 and RAM 103.

The ROM 102 stores programs and data in advance, and is made of a semiconductor memory. The RAM 103 provides a work area for temporarily storing the data processed by various forms of program executed by the CPU 101. The HDD 104 has a function of storing the information on the object shown on the display 105. The HDD 104 is made of lamination of metallic disks formed by application or vapor deposition of a magnetic substance. This is rotated at a high speed by a motor and is brought close to the magnetic head, whereby data is read. The operations of the display 105, camera 106 and microphone 107 are controlled by the CPU 101.

### [Conflict and separation of an object]

Incidentally, when the participants P1 through P4 have a discussion using the objects D1 and D2 on the display 105 of the table type image display device A of Fig. 1, objects D1 and D2 are easy to see or difficult to see, depending on the position of each of the participants P1 through P4.

For example, when the participants P1 and P2 have a discussion using the object D2 of Fig. 1, the participant P1 is closer to the object D2, which is therefore easy to view, whereas the participant P2 is farther from the object D2, which is therefore difficult to watch. Further, when the participants P1 and P3 have a discussion using the object D1 of Fig. 1, the participant P3 can clearly watch the object D1. However, the top and bottom of the object D1 are reversed for the participant P1. The participant P1 has to view the object D1 upside down. This is difficult to see.

Thus, means are provided to ensure that, when a plurality of participants have a discussion watching one and the same object, and a conflict occurs among a plurality of participants, this object is separated into two or more parts, so that a plurality of participants can easily view the object. (The term "Conflict" in the sense in which it is used in the present invention is applied to the case wherein, when a plurality of participants have a discussion using one and the same object, attention of a plurality of participants is paid to on one and the same object). Referring to Figs. 1 and 3 through 5, the following describes the details of separating an object on the display 105.

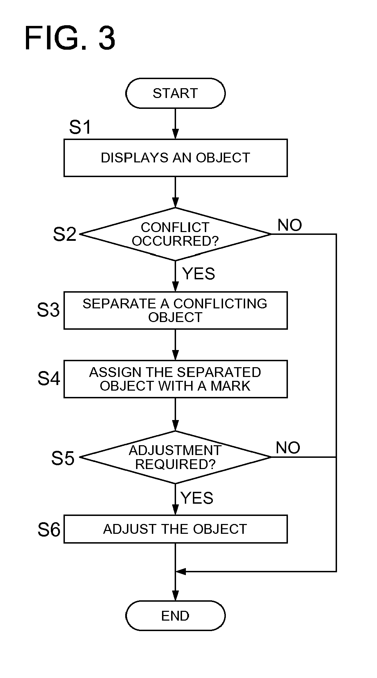

Fig. 3 is a flow chart representing separation of an object. The decision step (Steps S2 and S5) of Fig. 3 is implemented by collaboration of the CPU 101 of the image display device A with the ROM 102 and RAM 103.

In the first place, objects (objects D1 and D2 of Fig. 1) are shown on the display 105 of the image display device A (Fig. 1) (Step S1). The information of the displayed object is stored, for example, in the HDD 104. The participants P1 through P4 selects the object to be shown on the display 105, and the selected object is then displayed.

When the object has appeared on the display 105, the participants P1 through P4 starts discussion, using that object. In this case, a step is automatically taken to determine whether or not a conflict has occurred among the participants in the object shown on the display 105 (Step S2). While the object is shown on the display 105, the CPU 101 automatically checks at all times whether or not the conflict has occurred among the participants.

Many ways can be considered to detect a conflict. For example, detection can be made by the direction pointed by the fingers of the participants P1 through P4, voices uttered by the participants P1 through P4, or the line of sight of the participants P1 through P4.

When detection is made by the direction pointed by the fingers of the participants P1 through P4 or the line of sight of the participants P1 through P4, the image captured by the camera 106 placed before the participants P1 through P4 is analyzed so that the direction pointed by the finger or the line of sight is identified for each of the participants. The directions and others identified for respective participants are put together and analyzed. If there is agreement in the directions pointed by the fingers of the participants with respect to one and the same object, or there is agreement in the lines of sight among the participants, detection is made to determine that a conflict has occurred.

If a conflict is detected by voices uttered by participants P1 through P4, the voices uttered by participants are identified for each participant according to the vocal sounds picked up by the microphone 107. A keyword is set for each of the objects appearing on the display 105. The voices uttered by a plurality of participants agree with the keyword of one and the same object, detection is made to determine that a conflict has occurred. In this case, the objects and keywords are stored in the ROM 102 and others in the form of a matrix table.

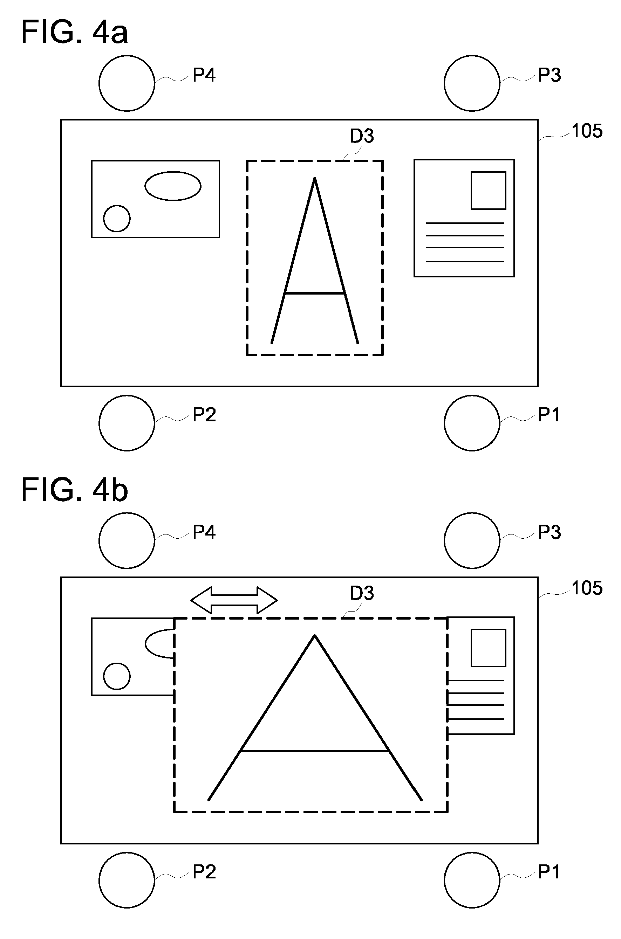

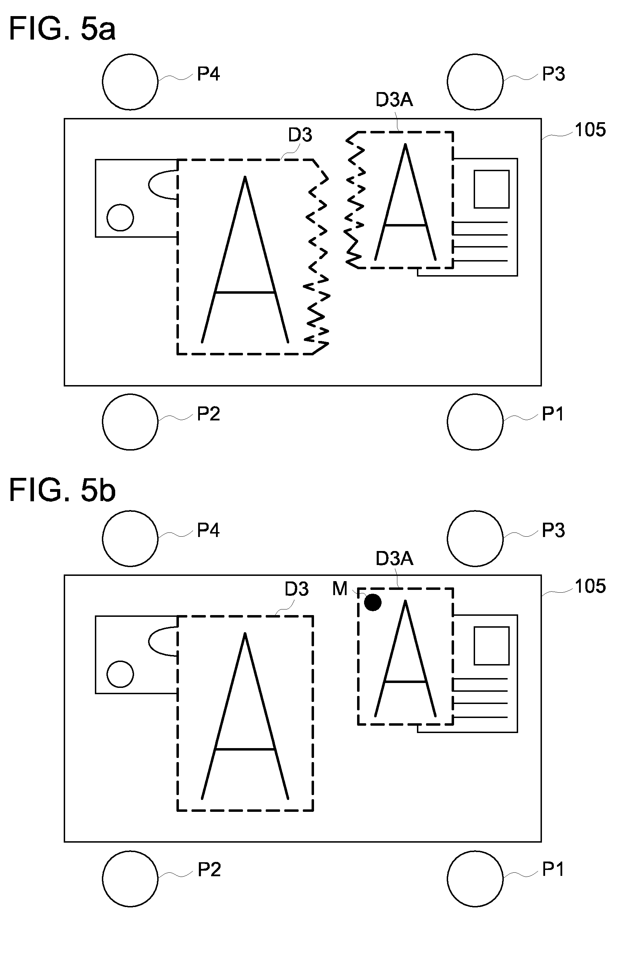

If a conflict among participants is determined to have occurred in Step S2 (Step S2; Yes), the conflicting object is separated for easier viewing among the participants in the discussion (Step S3). The separation of the conflicting object will be described with reference to Figs. 4 and 5:
Figs. 4a and 4b and Figs.5a and 5b are explanatory diagram representing an overview of the separation of a conflicting object. Fig. 4a is a plan view showing a conflicting object, Fig. 4b is a plan view showing that a conflicting object is expanded and is vibrating. Fig. 5a is a plan view showing that a conflicting object is separated, and Fig. 5b is a plan view showing that a conflicting object is marked.

As shown in Fig. 4a, three objects are shown on the display 105. This denotes that a conflict has occurred to the object D3 indicated by a broken line. If the conflict of the object D3 has been detected, the object D3 expands in a prescribed direction as shown in Fig. 4b and vibrates in the arrow-marked direction to notify the user of the presence of a conflicting object.

As shown in Fig. 5a, the conflicting object is broken into two objects D3 and D3A. The new object D3A resulting from separation are provided with the same letter and image (letter A in the present embodiment) as those of the object D3. This procedure is followed to achieve separation of the conflicting object.

Going back to Fig. 3, the description of the flow chart will continue. If separation of the conflicting object has been completed in Step S3, a newly born object is assigned with a mark (Step S4). The newly born object is assigned with a mark for the purpose of distinguishing it from the original object. As shown in Fig. 5b, the new object D3A is assigned with a black dot mark M. This arrangement allows the users to identify the separated object easily.

When a mark has been assigned in Step S4, a step is taken to determine if the position or direction of displaying a new object generated by separation should be adjusted or not (Step S5). For example, as shown in Fig. 5b, when the participants and P2 has a discussion on the object D3 and a conflict has occurred with respect to the object D3, the position of the object D3A displayed may be far from the participant P1, if only the object D3 is separated. Further, participants P1 and P3 have a discussion on the object D3 and a conflict has occurred with respect to the object D3, the object D3A still appears reversed to the participant P3.

Thus, as a result of a decision step taken in Step S5, if it has been determined that the position or direction of displaying a new object generated by separation should be adjusted (Step S5; Yes), the position or direction of the object is adjusted (Step S6). A series of the related operations are now completed. The decision in Step S5 is made by the CPU 101 according to a prescribed program, based on the information on the positions of completing participants and others. Thus, easier viewing of the object among a plurality of participants will be ensured by adjusting the position or direction of displaying an object generated by separation. Figs. 4a, 4b and Figs. 5a and 5b represent how an object is separated into two. An object can be separated into three or more, depending on the number of the conflicting participants. It is also possible to arrange such a configuration that, after the lapse of a prescribed period of time, a newly born object D3A is again merged with the object D3 to get the original one object.

As described above with reference to Figs. 3 through 5, when a conflict among a plurality of participants has occurred, for example, while these participants have a discussion observing one and the same object, one object is separated into at least two. This will ensure easier viewing among these participants, so that discussion will be held more effectively. The need of special operation by the participants can be eliminated by automatic detection of a conflicting object and separation of such an object. This will save much time and effort.

It is to be expressly understood, however, that the present invention is not restricted to the aforementioned embodiment. The present invention can be embodied in a great number of variations with appropriate modification or additions, without departing from the technological spirit and scope of the invention claimed.

This embodiment has been described using a table type image display device A, as shown in Fig. 1. An image display device of another configuration can also be used. For example, the display 105 can be designed to show an object in the vertical direction.

In the present embodiment, the detecting section, separating section and adjusting section are constituted by CPU 101 operating in collaboration with the ROM 102 and RAM 103, as shown in Fig. 2. However, the detecting section, separating section and adjusting section can be constituted by using a plurality of CPUs, ROMs and RAMs.

### DESCRIPTION OF REFERENCE NUMERALS

- A: Image display device
- D1, D2: Objects
- 101: CPU
- 102: ROM
- 103: RAM
- 104: HDD
- 105: Display
- 106: Camera
- 107: Microphone
- 108: Communication section

## Claims

1. An image display device comprising:
a display section for displaying an object;
a detecting section for automatically detecting a conflict among a plurality of users regarding the object displayed on the display section; and
a separating section for separating a conflicting object into at least two objects when a conflict has been detected by the detecting section.

2. The image display device described in claim 1, comprising an adjusting section for adjusting a position or a direction of an object separated by the separating section.

3. The image display device described in claim 1 or claim 2, wherein the display section displays an object separated by the separating section with assigning a mark.

4. The image display device described in any one of claims 1 to 3, wherein the detecting section detects the conflict by directions pointed by fingers of users.

5. The image display device described in any one of claims 1 to 3, wherein the detecting section detects the conflict by voices uttered by users.

6. The image display device described in any one of claims 1 to 3, wherein the detecting section detects the conflict by a line of sight of users.
